# EUROPÄISCHE PATENTSCHRIFT

(11) **EP 2 000 200 B1**
(45) Veröffentlichungstag und Bekanntmachung des Hinweises auf die Patenterteilung: **04.08.2010**
(21) Anmeldenummer: 07109246.4
(22) Anmeldetag: 30.05.2007
(51) Int. Cl.: B01J 19/08, C08J 3/28

(54) **Vorrichtung zur Polymerisation**
Polymerisation device
Dispositif de polymérisation

(43) Veröffentlichungstag der Anmeldung: 10.12.2008
(73) Patentinhaber: iie Gesellschaft für innovative Industrieelektronik mbH, 83564 Soyen (DE)
(72) Erfinder: Kress, Ekkehard, Industrieelektronik mbH, Marienplatz 19, 83512, Wasserburg am Inn (DE)
(74) Vertreter: Oberhardt, Knut

(56) Entgegenhaltungen:
- EP-A2- 0 921 152
- WO-A1-01/78891
- DE-A1- 4 243 270
- JP-A- 2000 041 701

## Beschreibung

Die Erfindung betrifft eine Vorrichtung zur Polymerisation von mit UV-Strahlung härtbaren Kunststoffen nach dem Oberbegriff von Anspruch 1.

Solche Vorrichtungen sind insbesondere für die Aushärtung von Lacken und Farben auf beliebigen Oberflächen bekannt geworden. Üblicherweise werden hierfür Entladungslampen verwendet, die ein Emissionsspektrum aufweisen, welches einen mehr oder weniger großen Anteil im UV-Bereich besitzt. Die Entwicklungen auf dem Gebiet gehen in die Richtung, den UV-Anteil dieser Entladungslampen zu erhöhen, um so den Energiebedarf der Entladungslampen bei gleicher UV-Ausbeute verringern zu können. Es wurden auch bereits Überlegungen laut, für die Härtung Laserstrahlung im UV-Bereich zu verwenden. Laserquellen, die aufgrund ihrer Leistung für diesen Einsatzzweck in Frage kommen, wie z. B. Excimer-Laser, sind für diesen Zweck jedoch viel zu groß und zu teuer.

Der Erfindung liegt die Aufgabe zugrunde, eine Vorrichtung zur Polymerisation von mit UV-Strahlung härtbaren Kunststoffen zu schaffen, deren Strahlungsquelle gegenüber herkömmlichen Entladungslampen eine verbesserte Energieeffizienz aufweist und deren Härtleistung ausreichend groß ist. Die Strahlungsquelle soll weiterhin eine geringe Baugröße aufweisen.

Gelöst wird die Aufgabe gemäß der Erfindung durch eine Vorrichtung zur Polymerisation von mit UV-Strahlung härtbaren Kunststoffen mit den Merkmalen von Anspruch 1. Es wurde herausgefunden, dass für die Härtung der Kunststoffe nicht nur die UV-Strahlung verantwortlich ist. Die UV-Strahlung initiiert den Polymerisationsprozess und hält diesen aufrecht. Die Geschwindigkeit des Polymerisationsprozesses hängt jedoch nicht nur von der UV-Strahlung ab. Die Polymerisationsgeschwindigkeit ist dagegen auch von der Temperatur abhängig. Durch die zusätzliche Einwirkung von IR-Strahlung lässt sich die Temperatur entsprechend erhöhen. Mit Hilfe eines IR-Strahlers lässt sich eine sehr lokale Temperaturerhöhung bewirken, was sich als wesentlich effizienter herausgestellt hat als beispielsweise die Erhöhung der Umgebungstemperatur in einem Tunnelofen. Durch die Beaufschlagung des zu härtenden Kunststoffs mit UV-Strahlung und IR-Strahlung wird nur immer der gerade zu härtende Bereich erwärmt. Es kann auf diese Weise sogar eine stärkere Erwärmung des Kunststoffs als in einem Tunnelofen durchgeführt werden, da nicht der ganze Körper die Temperatur annimmt, sondern nur ein lokal begrenzter Bereich erwärmt wird, der nach der Bestrahlung sofort wieder abkühlt.

Ein Festkörperlaser, der im UV-Bereich emittiert, kann so aufgebaut werden, dass er die nötige Leistung erreicht und trotzdem eine kleine Baugröße aufweist. Dies wird jedoch nur durch die gleichzeitige Applikation des IR-Strahlers möglich, da sich hierdurch die notwendige UV-Leistung verringert. Ein Festkörperlaser ist mit verhältnismäßig geringen Herstellkosten belastet.

Bevorzugt erzeugt der Festkörperlaser auf dem zu härtenden Kunststoff ein linienförmiges Strahlungsbild. Beispielsweise bei der Trocknung von UV-härtbaren Farben auf bedruckten Gegenständen sollte das linienförmige Strahlungsbild des Festkörperlasers senkrecht zur Transportrichtung der zu trocknenden Gegenstände verlaufen. Die Linie sollte eine Länge aufweisen, die gewährleistet, dass die gesamte zu trocknende Oberfläche von dem linienförmigen Strahlungsbild bestrichen wird.

Als IR-Strahlungsquelle kann ein herkömmlicher IR-Strahler eingesetzt werden. Ein solcher IR-Strahler erzeugt auf dem zu härtenden Kunststoff ein nicht scharf begrenztes Feld. Das Strahlungsbild der IR-Strahlungsquelle und der UV-Strahlungsquelle sollten in diesem Falle so überlagert werden, dass zu trocknende Gegenstände erst in das Feld der IR-Strahlungsquelle eintreten und der zu härtende Kunststoff genügend Zeit hat, sich zu erwärmen. Das linienförmige Abbild der UV-Strahlungsquelle sollte eher in dem Bereich des IR-Feldes liegen, in dem die zu trocknenden Gegenstände erst kurz vor Verlassen des IR-Feldes eintreten. Auf diese Weise kann sichergestellt werden, dass der zu härtende Kunststoff beim Eintritt in das Abbild der UV-Strahlungsquelle eine Temperatur aufweist, die eine schnelle und sichere Durchtrocknung des zu härtenden Kunststoffes gewährleistet.

Bevorzugt erzeugt jedoch auch die IR-Strahlungsquelle ein linienförmiges Strahlungsbild auf dem zu härtenden Kunststoff. Durch die beiden linienförmigen Strahlungsbilder wird der zu härtende Kunststoff nur in einem sehr kurzen Zeitraum mit der notwendigen IR- und UV-Energie beaufschlagt. Da es sich hier um eine äußerst kurze Strahlungseinwirkung handelt, kann mit sehr hoher Energie gearbeitet werden. Ohne den Kunststoff zu schädigen, kann er für diesen sehr kurzen Zeitraum auf eine höhere Temperatur gebracht werden als bei der Verwendung eines herkömmlichen IR-Strahlers. Die Aushärtgeschwindigkeit kann auf diese Weise noch gesteigert werden.

In vorteilhafter Weise weist die IR-Strahlungsquelle zur Erzeugung des linienförmigen Strahlungsbildes einen Diodenlaser auf. Diodenlaser, die im IR-Bereich strahlen sind sehr leistungsstark und können inzwischen zu sehr geringen Kosten hergestellt werden.

Bei Festkörperlasern lässt sich die Ausgangsleistung sehr gut regeln. Dadurch kann das Verhältnis der Intensitäten der UV-Strahlung und der IR-Strahlung zueinander eingestellt werden. Die erfindungsgemäße Vorrichtung zur Polymerisation kann auf diese Weise für unterschiedliche zu härtende Kunststoffe verwendet werden. Das Verhältnis der Intensitäten ist jedoch nicht nur von dem zu härtenden Kunststoff selbst abhängig, sondern unterscheidet sich auch in Abhängigkeit von dem Material und der Art von Gegenständen, die beispielsweise mit zu trocknender Farbe bedruckt wurden. Auch in dieser Hinsicht kann eine optimale Abstimmung der Intensitäten erfolgen.

Die UV-Strahlenquelle und die IR-Strahlenquelle können aus Laserbarren aufgebaut werden. Die Laserbarren werden zu Lasereinheiten verbunden, die so dimensioniert sind, dass die für die Anlage notwendige Linienlänge erreicht wird.

Bevorzugt sind die UV-Strahlenquelle und die IR-Strahlenquelle übereinander angeordnet. Beide Strahlungsquellen können dadurch in sehr einfacher Weise so ausgerichtet werden, dass die UV-Linie und die IR-Linie auf dem zu härtenden Kunststoff exakt plaziert sind. Es besteht die Möglichkeit, die IR-Linie vor die UV-Linie zu legen, so dass der zu härtende Kunststoff zuerst auf eine höhere Temperatur gebracht wird und erst danach die Polymerisation in Gang gesetzt wird.

Besonders vorteilhaft werden die UV-Strahlenquelle und die IR-Strahlenquelle jedoch so ausgerichtet, dass die UV-Linie und die IR-Linie genau übereinander liegen. Der zu härtende Kunststoff erhält auf diese Weise die Energien mit unterschiedlicher Wellenlänge, die er für die Polymerisation benötigt, gleichzeitig.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:

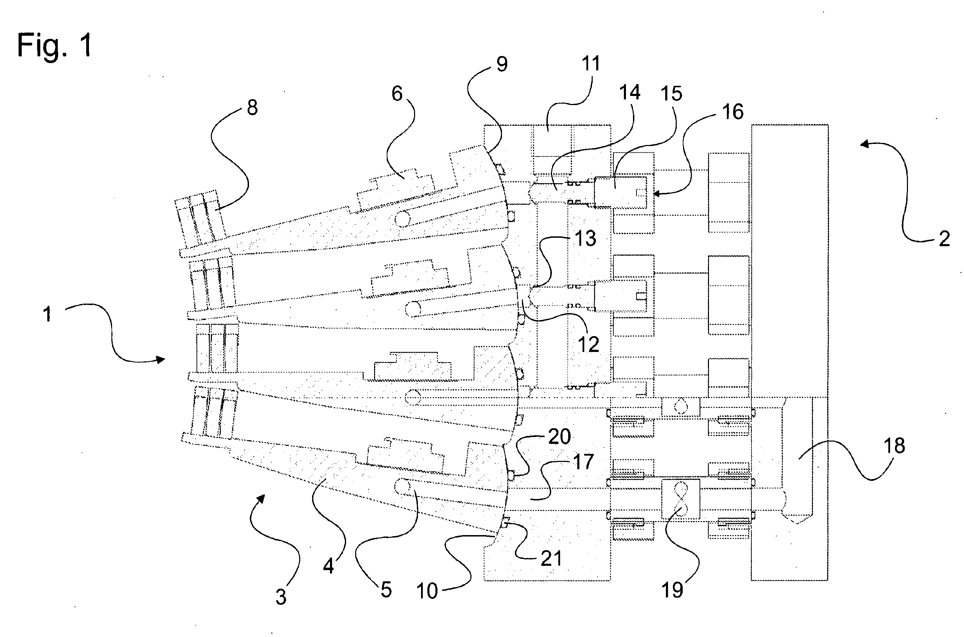

- Fig. 1: einen Querschnitt durch eine Montageeinheit mit vier Lasereinheiten für die erfindungsgemäße Vorrichtung zur Polymerisation von mit UV-Strahlung härtbaren Kunststoffen.

Fig. 1 zeigt ein Lasermodul 1, das eine Montageeinheit 2 und vier daran montierte Lasereinheiten 3 aufweist. Jede Lasereinheit 3 zeigt einen Grundkörper 4, in dem Kühlkanäle 5 verlaufen, einen auf dem Grundkörper 4 montierten Laserdiodenbarren 6 und eine Sammellinsenoptik 8. Der Grundkörper 4 weist an der der Sammellinsenoptik 8 gegenüberliegenden Seite eine gekrümmte Justierfläche 9 auf, die vollflächig auf einer gleich gekrümmten Montagefläche 10 aufliegt. Die Montagefläche 10 ist Bestandteil der Montageeinheit 2. Jede Lasereinheit 3 ist in der Nähe der Sammellinsenoptik 8 durch eine hier nicht dargestellte Achse schwenkbar gelagert und durch hier nicht dargestellte Schrauben im Bereich der Justier- 9 und Montagefläche 10 lösbar fixiert.

Jede gekrümmte Justier- 9 und Montagefläche 10 ist als Zylindersegment ausgebildet. Der Radius entspricht hierbei der Entfernung der Schwenkachse zur Justier- 9 bzw. Montagefläche 10.

In der Montageeinheit 2 befindet sich ein zentraler Kühlmittelzulauf 11. Von dem zentralen Kühlmittelzulauf 11 zweigen vier zuführende Kühlkanäle 12 ab, die zu den einzelnen Montageflächen 10 führen. Der Eingang des zuführenden Kühlkanals 12 wird durch eine Düse 13 gebildet, in die eine Düsennadel 14 ragt. Diese Düsennadel 14 ist mit einer Einstellschraube 15 unlösbar verbunden. Die Düsennadel 14 und die Einstellschraube 15 bilden die Hauptbestandteile einer Drossel 16.

Von jeder Montagefläche 10 führt ein abführender Kühlkanal 17 zu einem zentralen Kühlmittelablauf 18. Dieser zentrale Kühlmittelablauf 18 ist ebenfalls Bestandteil der Montageeinheit 2. Der Verlauf des abführenden Kühlkanals 17 wird durch einen Durchflussmesser 19 unterbrochen.

In den Montageflächen 10 befindet sich um jede Öffnung der zuführenden 12 und abführenden Kühlkanäle 17 eine runde Nut 20 mit einem rechteckigen Querschnitt, in die ein O-Ring 21 eingelegt ist.

In jeder Lasereinheit 3 ist - in diesem Schnitt nicht ersichtlich - eine Vielzahl von Laserbarren 6 nebeneinander angeordnet. Die Laserdiodenbarren 6 der Lasereinheiten 3 emittieren Strahlung, die durch die direkt vorgeschaltete Kollimationslinse parallel gerichtet wird und so ein linienförmiges Strahlungsbild in der Länge der Lasereinheiten 3 ergibt. Anschließend passiert die Laserstrahlung eine Sammellinsenoptik 8, die die Strahlung zu einer schmalen Linie formt. Die genaue Form der Sammellinsenoptik 8 hängt von dem Abstand des zu härtenden Kunststoffes von der Lasereinheit und von der benötigten Breite des linienförmiges Strahlungsbildes ab. Die Breite der Linie wiederum steht in Zusammenhang mit der Leistung der Lasereinheiten 3 und der Geschwindigkeit, mit der die zu trocknenden Gegenstände vorbeigefördert werden.

Die durch die Laserdiodenbarren 6 erzeugte Wärme wird an das in den Kühlkanälen 5 des Grundkörpers 4 zirkulierende Kühlmittel abgegeben. Das kalte Kühlmittel wird in den zentralen Kühlmittelzulauf 11 der Montageeinheit 2 eingespeist und von dort auf die einzelnen zuführenden Kühlkanäle 12 verteilt. Von dort gelangt das immer noch kalte Kühlmittel in die Kühlkanäle 5 des Grundkörpers 4. Nach der Aufnahme der Verlustwärme der Laserdiodenbarren 6 strömt die warme Kühlflüssigkeit durch die abführenden Kühlkanäle 17 der Montageeinheit 2 in den zentralen Kühlmittelablauf 18.

Da die optische Leistung der Lasereinheiten 3 davon abhängt, wie viel Wärme abgeführt wird, wird der Volumenstrom des Kühlmittels für jede Lasereinheit 3 individuell eingestellt. Hierzu wird im zuführenden Kühlkanal 12 der Öffnungsquerschnitt zwischen der Düsennadel 14 und der Düse 13 mittels der Einstellschraube 15 so eingestellt, dass durch jede Lasereinheit 3 die gleiche Menge an Kühlmittel pro Zeiteinheit strömt. Um dies zu verifizieren, befindet sich in jedem abführenden Kühlkanal 17 ein Durchflussmesser 19.

In vorteilhafter Weise erfolgt die Abdichtung der einander gegenüberliegenden Öffnungen der Kühlkanäle 5 des Grundkörpers 4, der zuführenden 12 und der abführenden Kühlkanäle 17, die das unter Druck stehende Kühlmittel führen, durch O-Ringe 21, die in einer Nut 20 der Montagefläche 10 liegen.

Zur Justage des Lasermoduls 1 werden hier nicht gezeigte Fixiermittel, z. B. Schrauben, gelöst und die Lasereinheiten 2 so um die Schwenkachse gedreht, bis die Strahlungsbilder aller Lasereinheiten 3 auf einer Linie auf dem zu härtenden Kunststoff zusammentreffen. Da die Krümmung der Justagefläche 9 und der Montierfläche 10 gleich geformt ist, verändert sich der Abstand zwischen der Montageeinheit 2 und Lasereinheit 3 während des Schwenkvorganges nicht. Da die Lasereinheiten 3 zur Justage betriebsbereit sein müssen und bereits mit Kühlmittel beaufschlagt sind, dichtet der O-Ring 21 auch während des Schwenkens so zuverlässig ab, dass ein Austritt von Kühlmittel im Bereich des O-Rings 21 nicht erfolgt. Die Öffnungen der Kühlkanäle 5 des Grundkörpers 4, der zuführenden 12 und der abführenden Kühlkanäle 17 sind so dimensioniert, dass der Querschnitt der einen Öffnung den Querschnitt der ihr gegenüberliegenden Öffnung über den gesamten Justierbereich vollflächig überdeckt. Dadurch kommt es nicht zu ungewollten Einengungen im Bereich der Kühlkanäle. Dies könnte ansonsten zu einem Anstieg des Drucks auf die O-Ringe 21 führen und eine Leckage, gerade während der Justage, herbeiführen. In vorteilhafter Weise wird die Justage der Lasereinheiten vor dem Einstellen der Durchflussmenge des Kühlmittels durch die einzelnen Lasereinheiten 3 vorgenommen.

Die Montage mehrerer Lasereinheiten 3 auf eine Montageeinheit 2 führt zu einer äußerst Platz sparenden Anordnung. Der Einsatz von O-Ringen 21 als Dichtung ersetzt die ansonsten notwendigen kühlmittelführenden Schläuche oder Leitungen. Dies alles führt zu einem äußerst kompakten und leistungsstarken Lasermodul 1.

Wird das Lasermodul 1 in einer Anlage zur Trocknung von mit UV-härtenden Farben bedruckten Gegenständen verwendet, sind die Lasereinheiten mit verschiedenen Lasern bestückt. Aufgrund der unterschiedlichen Leistungsfähigkeit von UV- und IR-Festkörperlasern wird das Lasermodul 1 mit drei UV-Lasereinheiten und einer IR-Lasereinheit bestückt. Die Anordnung der unterschiedlichen Lasereinheiten spielt keine Rolle, da alle Strahlungsbilder zu einer Linie überlagert werden.

Das Lasermodul 1 wird beispielsweise über einem Transportband installiert, auf dem die zu trocknenden Gegenstände transportiert werden. Die Linie der überlagerten Strahlungsbilder der vier Lasereinheiten 3 verläuft quer zur Transportrichtung der zu trocknenden Gegenstände und weist eine Länge auf, die in etwa der Breite des Transportbandes entspricht. Auf diese Weise kann sichergestellt werden, dass jeder Gegenstand mit der gleichen Strahlungsdosis beaufschlagt wird und dadurch nach dem Durchlauf unter dem Lasermodul auch den gleichen Trocknungsgrad aufweist.

### Bezugszeichenliste:

- 1: Lasermodul
- 2: Montageeinheit
- 3: Lasereinheit
- 4: Grundkörper
- 5: Kühlkanal der Lasereinheit
- 6: Laserdiodenbarren
- 8: Sammellinsenoptik
- 9: Justierfläche
- 10: Montagefläche
- 11: zentraler Kühlmittelzulauf
- 12: zuführender Kühlkanal
- 13: Düse
- 14: Düsennadel
- 15: Einstellschraube
- 16: Drossel
- 17: abführender Kühlkanal
- 18: zentraler Kühlmittelablauf
- 19: Durchflussmesser
- 20: Nut
- 21: O-Ring

## Patentansprüche

1. Vorrichtung zur Polymerisation von mit UV-Strahlung härtbaren Kunststoffen, **dadurch gekennzeichnet, dass** zwei unterschiedliche Strahlungsquellen für UV-Strahlung und IR-Strahlung vorgesehen sind, mit deren Strahlung der zu härtende Kunststoff beaufschlagt wird, wobei die Strahlungsquelle für die UV-Strahlung einen Festkörperlaser aufweist.

2. Vorrichtung zur Polymerisation nach Anspruch 1, **dadurch gekennzeichnet, dass** der Festkörperlaser ein linienförmiges Strahlungsbild auf dem zu härtenden Kunststoff erzeugt.

3. Vorrichtung zur Polymerisation nach Anspruch 2, **dadurch gekennzeichnet, dass** die IR-Strahlungsquelle ein nicht scharf begrenztes Feld auf dem zu härtenden Kunststoff erzeugt.

4. Vorrichtung zur Polymerisation nach Anspruch 2, **dadurch gekennzeichnet, dass** die IR-Strahlungsquelle ein linienförmiges Strahlungsbild auf dem zu härtenden Kunststoff erzeugt.

5. Vorrichtung zur Polymerisation nach Anspruch 4, **dadurch gekennzeichnet, dass** die IR-Strahlungsquelle einen Diodenlaser aufweist.

6. Vorrichtung zur Polymerisation nach Anspruch 5, **dadurch gekennzeichnet, dass** das Verhältnis der Intensitäten der UV-Strahlung und der IR-Strahlung zueinander einstellbar ist.

7. Vorrichtung zur Polymerisation nach Anspruch 2, **dadurch gekennzeichnet, dass** die UV-Strahlenquelle und die IR-Strahlenquelle aus Laserbarren aufgebaut sind.

8. Vorrichtung zur Polymerisation nach Anspruch 7, **dadurch gekennzeichnet, dass** die UV-Strahlenquelle und die IR-Strahlenquelle übereinander angeordnet sind.

9. Vorrichtung zur Polymerisation nach Anspruch 8, **dadurch gekennzeichnet, dass** die UV-Strahlenquelle und die IR-Strahlenquelle so ausgerichtet sind, dass ihre Strahlungsbilder auf der gleichen Linie auf dem zu härtenden Kunststoff abgebildet werden.

## Claims

1. An apparatus for the polymerisation of plastic materials hardenable by means of UV radiation, **characterised in that** two different radiation sources are provided for the UV radiation and IR radiation that is applied to the plastic material to be hardened, wherein the radiation source for the UV radiation comprises a solid-state laser.

2. The apparatus for polymerisation according to claim 1, **characterised in that** the solid-state laser creates a line-shaped radiation image on the plastic material to be hardened.

3. The apparatus for polymerisation according to claim 2, **characterised in that** the IR radiation source creates an imprecisely defined area on the plastic material to be hardened.

4. The apparatus for polymerisation according to claim 2, **characterised in that** the IR radiation source creates a line-shaped radiation image on the plastic material to be hardened.

5. The apparatus for polymerisation according to claim 4, **characterised in that** the IR radiation source comprises a diode laser.

6. The apparatus for polymerisation according to claim 5, **characterised in that** the ratio of the intensities of the UV radiation to the IR radiation is adjustable.

7. The apparatus for polymerisation according to claim 2, **characterised in that** the UV radiation source and the IR radiation source are constructed of laser bars.

8. The apparatus for polymerisation according to claim 7, **characterised in that** the UV radiation source and the IR radiation source are arranged one on top of the other.

9. The apparatus for polymerisation according to claim 8, **characterised in that** the UV radiation source and the IR radiation source are aligned in such a manner that their radiation images are imaged onto the same line on the plastic material to be hardened.

## Revendications

1. Dispositif pour la polymérisation de matières synthétiques pouvant durcir avec un rayonnement ultraviolet, **caractérisé en ce que** deux sources différentes de rayonnement pour un rayonnement ultraviolet et un rayonnement infrarouge sont prévues, leur rayonnement est appliqué à la matière synthétique à durcir, la source de rayonnement présentant pour le rayonnement ultraviolet un laser à solide.

2. Dispositif pour la polymérisation selon la revendication 1, **caractérisé en ce que** le laser à solide produit une image de rayonnement en forme de ligne sur la matière synthétique à durcir.

3. Dispositif pour la polymérisation selon la revendication 2, **caractérisé en ce que** la source de rayonnement infrarouge produit un champ délimité non fortement sur la matière synthétique à durcir.

4. Dispositif pour la polymérisation selon la revendication 2, **caractérisé en ce que** la source de rayonnement infrarouge produit une image de rayonnement en forme de ligne sur la matière synthétique à durcir.

5. Dispositif pour la polymérisation selon la revendication 4, **caractérisé en ce que** la source de rayonnement infrarouge présente un laser à diode.

6. Dispositif pour la polymérisation selon la revendication 5, **caractérisé en ce que** la proportion des intensités du rayonnement ultraviolet et du rayonnement infrarouge est réglable l'une par rapport à l'autre.

7. Dispositif pour la polymérisation selon la revendication 2, **caractérisé en ce que** la source de rayons ultraviolets et la source de rayons infrarouges sont constituées de barres laser.

8. Dispositif pour la polymérisation selon la revendication 7, **caractérisé en ce que** la source de rayons ultraviolets et la source de rayons infrarouges sont disposées l'une au-dessus de l'autre.

9. Dispositif pour la polymérisation selon la revendication 8, **caractérisé en ce que** la source de rayons ultraviolets et la source de rayons infrarouges sont orientées de manière telle que leurs images de rayonnement sont reproduites sur la même ligne sur la matière synthétique à durcir.
